# EUROPÄISCHE PATENTSCHRIFT

(11) **EP 1 429 045 B1**
(45) Veröffentlichungstag und Bekanntmachung des Hinweises auf die Patenterteilung: **02.11.2005**
(21) Anmeldenummer: 03026359.4
(22) Anmeldetag: 18.11.2003
(51) Int. Cl.: F16F 9/05, F16F 9/084, F16F 9/04

(54) **Luftfederanordnung**
Air spring arrangement
Arrangement de ressort pneumatique

(30) Priorität: 11.12.2002 DE 10257855
(43) Veröffentlichungstag der Anmeldung: 16.06.2004
(73) Patentinhaber: Carl Freudenberg KG, 69469 Weinheim (DE)
(72) Erfinder: Branco, Antonio, 21244 Buchholz (DE); Gerlach, Kay, Dipl.-Ing., 21224 Rosengarten (DE); Lorenz, Rüdiger, Dipl.-Ing., 21335 Lüneburg (DE)
(74) Vertreter: Mattausch, Klaus

(56) Entgegenhaltungen:
- DE-A- 3 531 542
- DE-A- 3 934 821
- DE-B- 1 132 013
- FR-A- 2 728 948

## Beschreibung

Die Erfindung betrifft eine Luftfederanordnung eines Fahrzeuges, umfassend eine erste und zweite Luftfeder, die parallel geschaltet sind, wobei jede Luftfeder wenigstens aus folgenden Bauteilen besteht:
- einem Luftfederbalg aus elastomerem Werkstoff, der insbesondere mit einem eingebetteten Festigkeitsträger versehen ist, wobei der Luftfederbalg unter Ausbildung einer Schlaufe eine volumenelastische Luftkammer einschließt, wobei die beiden Luftkammern mittels einer Überströmleitung miteinander in Verbindung stehen;
- einem Deckel mit einem Anschlussbereich für das eine Balgende;
- einem Abrollkolben mit ebenfalls einem Anschlussbereich für das andere Balgende sowie ferner mit einer freien Abrollfläche für die Schlaufe.

Eine derartige Luftfederanordnung ist beispielsweise in der Patentschrift EP 0 866 759 B1 beschrieben, und zwar mit der schwerpunktmäßigen Anwendung für den Schienenfahrzeugbereich. Diese Federvorrichtung befindet sich dabei zwischen einer Tragplatte (Wagenkasten) und einem Unterbau (Drehgestell), wobei innerhalb der Tragplatte eine Überströmleitung verläuft, die die beiden Luftkammern druckausgleichend miteinander verbindet.

Im Rahmen einer Weiterentwicklung besteht die Aufgabe der Erfindung darin, eine gattungsgemäße Luftfederanordnung bereitzustellen, die im allgemeinen Fahrzeugbau (PKW, Nutz- und Schienenfahrzeuge), insbesondere aber für den PKW- und Nutzfahrzeugsektor, eine breite Anwendung findet, und zwar unter Erzeugung höherer Kräfte innerhalb kleinerer Bauräume.

Gelöst wird diese Aufgabe gemäß Kennzeichen des Patentanspruches 1 dadurch, dass die Luftkammer der zweiten Luftfeder mit einem zweiten Innendruck p₂ innerhalb der Luftkammer der ersten Luftfeder mit einem ersten Innendruck p₁ angeordnet ist, wobei die beiden Luftkammern mittels der Überströmleitung und eines Drucksystems so miteinander kommunizieren, dass der zweite Innendruck p₂ größer ist als der erste Innendruck p₁. Eine derartige Luftfederanordnung wird auch als Integralluftfedersystem bezeichnet.

Zweckmäßige Ausgestaltungen der Erfindung sind in den Patentansprüchen 2 bis 12 genannt.

Die Erfindung wird nun anhand von Ausführungsbeispielen unter Bezugnahme auf schematische Zeichnungen erläutert. Es zeigen:
- Fig. 1: eine Luftfederanordnung mit Kompressor;
- Fig. 2: eine Luftfederanordnung mit Luftdruckpumpe.

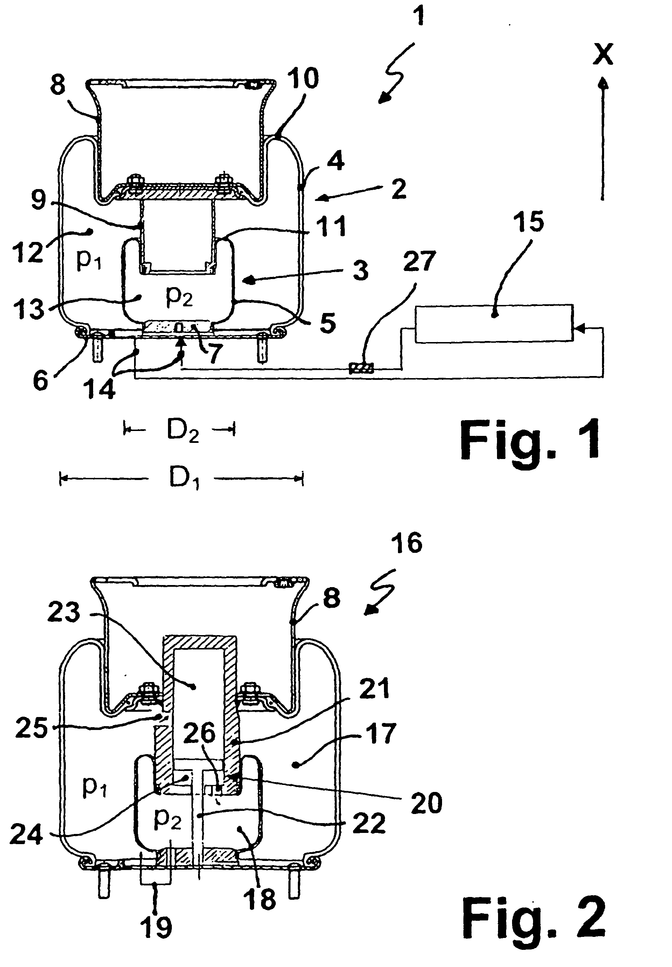

Fig. 1 zeigt eine Luftfederanordnung **1**, umfassend eine erste Luftfeder **2** und zweite Luftfeder **3**, die parallel geschaltet sind. Jede Luftfeder besteht dabei wenigstens aus einem Luftfederbalg **4** und **5**, einem Deckel **6** und **7** sowie einem Abrollkolben **8** und **9**. Die beiden Deckel und Abrollkolben weisen jeweils einen Anschlussbereich für das jeweilige Balgende auf. Die Befestigung erfolgt beispielsweise mit Klemmringen.

Die beiden Luftfederbälge **4** und **5** aus elastomerem Werkstoff sind zumeist mit einem eingebetteten Festigkeitsträger in Form eines Axialbalges (DE 36 43 073 A1) oder Kreuzlagenbalges (DE 29 04 522 A1) versehen. Jeder Luftfederbalg schließt unter Ausbildung einer Schlaufe **10** und **11** eine volumenelastische Luftkammer **12** und **13** ein, wobei die Schlaufen mit einer freien Abrollfläche des jeweiligen Abrollkolbens korrespondieren.

Von Bedeutung ist nun, dass die Luftkammer **13** der zweiten Luftfeder **3** mit einem zweiten Innendruck p₂ innerhalb der Luftkammer **12** der ersten Luftfeder **2** mit einem ersten Innendruck p₁ angeordnet ist, wobei die beiden Luftkammern mittels der Überströmleitung **14,** die hier die Deckel **6** und **7** umfasst, und eines innerhalb der Überströmleitung integrierten Drucksystems in Form eines Kompressors **15** so miteinander kommunizieren, dass der zweite Innendruck p₂ größer ist als der erste Innendruck p₁.

Die Deckel **6** und **7** der ersten und zweiten Luftfeder stehen in direktem Kontakt zueinander, so dass die beiden Schlaufen **10** und **11** richtungsgleich sind (Pfeilrichtung X). Dadurch dass der Deckel **6** als unteres Bauteil mit dem Fahrwerk in Verbindung steht und der Abrollkolben **8** als oberes Bauteil eine Anbindung mit der Karosserie aufweist, sind die beiden Schlaufen nach oben ausgerichtet. Auch das Umkehrprinzip, nämlich Deckel **6** oben mit Karosserieanbindung und Abrollkolben **8** unten mit Fahrwerksanbindung, wobei dann die beiden Schlaufen nach unten ausgerichtet sind, ist möglich.

Hinsichtlich des ersten Durchmessers D₁ des Luftfederbalges **4** der ersten Luftfeder **2** und des zweiten Durchmessers D₂ des Luftfederbalges **5** der zweiten Luftfeder **3** gilt insbesondere folgender Verhältnisbereich, wobei jeweils der Außendurchmesser Bezugspunkt ist:
erster Durchmesser D₁ zu zweitem Durchmesser D₂ = 1 : 0,75 bis 1 : 0,25

Der Kompressor **15** reguliert die entsprechenden Druckunterschiede zwischen den beiden Luftkammern **12** und **13**. Gegebenenfalls kann der Kompressor mit einem Ventilblock **27** kombiniert werden. Dieser Ventilblock ist innerhalb der Überströmleitung **14** integriert und dabei zwischen dem Kompressor und der Luftkammer **13** der zweiten Luftfeder **3** angeordnet.

Fig. 2 zeigt eine Luftfederanordnung **16** mit der Ausrichtung von Deckel, Abrollkolben und Schlaufen gemäß Fig. 1, wobei auch hier die Überströmleitung **19** zwischen den beiden Luftkammern **17** und **18** die Deckel der ersten und zweiten Luftfeder umfasst.

Das Drucksystem ist hier jedoch eine Luftdruckpumpe **20**, umfassend ein Behälterrohr **21**, das zugleich der Abrollkolben der zweiten Luftfeder ist, und eine Kolbenstange **22** mit Deckelbefestigung, die gleitend in das Behälterrohr eintaucht. Dabei wird eine erste Behälterkammer **23** und zweite Behälterkammer **24** gebildet, wobei die erste Behälterkammer, die in den Abrollkolben **8** hineinragt, einen Überströmkanal **25** zur Luftkammer **17** mit dem ersten Innendruck p₁ und die zweite Behälterkammer einen Überströmkanal **26** zur Luftkammer **18** mit dem zweiten Innendruck p₂ aufweisen. Die Luftdruckpumpe ist passiver Art, indem durch die Federbewegungen des Fahrzeuges der zweite Innendruck p₂ erzeugt wird. Der Strömungsverlauf der Luft ist durch die Pfeilrichtungen veranschaulicht.

Ansonsten wird hinsichtlich weiterer konstruktiver Details auf die Beschreibung der Luftfederanordnung **1** gemäß Fig. 1 verwiesen.

### Bezugszeichenliste

- **1**: Luftfederanordnung
- **2**: erste Luftfeder
- **3**: zweite Luftfeder
- **4**: Luftfederbalg
- **5**: Luftfederbalg
- **6**: Deckel
- **7**: Deckel
- **8**: Abrollkolben
- **9**: Abrollkolben
- **10**: Schlaufe
- **11**: Schlaufe
- **12**: Luftkammer
- **13**: Luftkammer
- **14**: Überströmleitung
- **15**: Drucksystem (Kompressor)
- **16**: Luftfederanordnung
- **17**: Luftkammer
- **18**: Luftkammer
- **19**: Überströmleitung
- **20**: Drucksystem (Luftdruckpumpe)
- **21**: Behälterrohr
- **22**: Kolbenstange
- **23**: erste Behälterkammer
- **24**: zweite Behälterkammer
- **25**: Überströmkanal
- **26**: Überströmkanal
- **27**: Ventilblock
- p₁: erster Innendruck
- p₂: zweiter Innendruck
- D₁: erster Durchmesser
- D₂: zweiter Durchmesser
- X: Pfeilrichtung

## Patentansprüche

1. Luftfederanordnung (1, 16) eines Fahrzeuges, umfassend eine erste und zweite Luftfeder (2, 3), die parallel geschaltet sind, wobei jede Luftfeder wenigstens aus folgenden Bauteilen besteht:
- einem Luftfederbalg (4, 5) aus elastomerem Werkstoff, der insbesondere mit einem eingebetteten Festigkeitsträger versehen ist, wobei der Luftfederbalg unter Ausbildung einer Schlaufe (10, 11) eine volumenelastische Luftkammer (12, 13, 17, 18) einschließt, wobei die beiden Luftkammern mittels einer Überströmleitung (14, 19) miteinander in Verbindung stehen;
- einem Deckel (6, 7) mit einem Anschlussbereich für das eine Balgende;
- einem Abrollkolben (8, 9) mit ebenfalls einem Anschlussbereich für das andere Balgende sowie ferner mit einer freien Abrollfläche für die Schlaufe (10, 11);
**dadurch gekennzeichnet, dass**
- die Luftkammer (13, 18) der zweiten Luftfeder (3) mit einem zweiten Innendruck p₂ innerhalb der Luftkammer (12, 17) der ersten Luftfeder (2) mit einem ersten Innendruck p₁ angeordnet ist, wobei die beiden Luftkammern mittels der Überströmleitung (14, 19) und eines Drucksystems (15, 20) so miteinander kommunizieren, dass der zweite Innendruck p₂ größer ist als der erste Innendruck p₁.

2. Luftfederanordnung nach Anspruch 1, **dadurch gekennzeichnet, dass** die Deckel (6, 7) der ersten und zweiten Luftfeder (2, 3) in direktem Kontakt zueinander stehen, so dass die beiden Schlaufen (10, 11) richtungsgleich sind.

3. Luftfederanordnung nach Anspruch 2, **dadurch gekennzeichnet, dass** die Überströmleitung (14, 19) zwischen den beiden Luftkammern (12, 13, 17, 18) die Deckel (6, 7) der ersten und zweiten Luftfeder (2, 3) umfasst.

4. Luftfederanordnung nach einem der Ansprüche 1 bis 3, **dadurch gekennzeichnet, dass** das Drucksystem ein Kompressor (15) ist, der innerhalb der Überströmleitung (14) integriert ist.

5. Luftfederanordnung nach Anspruch 4, **dadurch gekennzeichnet, dass** der Kompressor (15) mit einem Ventilblock (27) kombiniert ist.

6. Luftfederanordnung nach Anspruch 5, **dadurch gekennzeichnet, dass** der Ventilblock (27) innerhalb der Überströmleitung (14) integriert ist.

7. Luftfederanordnung nach Anspruch 6, **dadurch gekennzeichnet, dass** der Ventilblock (27) zwischen dem Kompressor (15) und der Luftkammer (13) der zweiten Luftfeder (3) angeordnet ist.

8. Luftfederanordnung nach einem der Ansprüche 1 bis 3, **dadurch gekennzeichnet, dass** das Drucksystem eine Luftdruckpumpe (20) ist, umfassend ein Behälterrohr (21), das zugleich der Abrollkolben der zweiten Luftfeder (3) ist, und eine Kolbenstange (22), die gleitend in das Behälterrohr eintaucht, und zwar unter Bildung einer ersten und zweiten Behälterkammer (23, 24), wobei die erste Behälterkammer (23) einen Überströmkanal (25) zur Luftkammer (17) der ersten Luftfeder (2) und die zweite Behälterkammer (24) einen Überströmkanal (26) zur Luftkammer (18) der zweiten Luftfeder (3) aufweisen.

9. Luftfederanordnung nach Anspruch 8, **dadurch gekennzeichnet, dass** die Luftdruckpumpe (20) passiver Art ist, indem durch die Federbewegungen des Fahrzeuges der zweite Innendruck p₂ erzeugt wird.

10. Luftfederanordnung nach Anspruch 8 oder 9, **dadurch gekennzeichnet, dass** die erste Behälterkammer (23) des Behälterrohres (21) in den Abrollkolben (8) der ersten Luftfeder (2) hineinragt.

11. Luftfederanordnung nach einem der Ansprüche 1 bis 10, **dadurch gekennzeichnet, dass** hinsichtlich des ersten Durchmessers D₁ des Luftfederbalges (4) der ersten Luftfeder (2) und des zweiten Durchmessers D₂ des Luftfederbalges (5) der zweiten Luftfeder (3) folgender Verhältnisbereich gilt:
erster Durchmesser D₁ zu zweitem Durchmesser D₂ = 1 : 0,85 bis 1 : 0,25

12. Luftfederanordnung nach Anspruch 11, **dadurch gekennzeichnet, dass** hinsichtlich des ersten Durchmessers D₁ und des zweiten Durchmesser D₂ folgender Verhältnisbereich gilt:
erster Durchmesser D₁ zu zweitem Durchmesser D₂ = 1 : 0,75 bis 1 : 0,25

## Claims

1. Air spring arrangement (1, 16) of a vehicle, comprising a first and second air spring (2, 3) which are connected in parallel, each air spring comprising at least the following components:
- an air spring bellows (4, 5) of elastomeric material, which is provided, in particular, with an embedded stability support, the air spring bellows enclosing an air chamber (12, 13, 17, 18) which is elastic in volume, with a loop (10, 11) being formed, the two air chambers being connected to each other by means of an overflow line (14, 19);
- a cover (6, 7) with a connecting region for the one end of the bellows;
- a rolling piston (8, 9) likewise with a connecting region for the other end of the bellows, and furthermore with a free rolling surface for the loop (10, 11);
**characterized in that**
- the air chamber (13, 18) of the second air spring (3) with a second internal pressure p₂ is arranged within the air chamber (12, 17) of the first air spring (2) with a first internal pressure p₁, the two air chambers communicating with each other by means of the overflow line (14, 19) and a pressure system (15, 20) in such a manner that the second internal pressure p₂ is greater than the first internal pressure p₁.

2. Air spring arrangement according to Claim 1, **characterized in that** the covers (6, 7) of the first and second air spring (2, 3) are in direct contact with each other, so that the two loops (10, 11) are identical in direction.

3. Air spring arrangement according to Claim 2, **characterized in that** the overflow line (14, 19) between the two air chambers (12, 13, 17, 18) encircles the covers (6, 7) of the first and second air springs (2, 3).

4. Air spring arrangement according to one of Claims 1 to 3, **characterized in that** the pressure system is a compressor (15) which is integrated within the overflow line (14).

5. Air spring arrangement according to Claim 4, **characterized in that** the compressor (15) is combined with a valve block (27).

6. Air spring arrangement according to Claim 5, **characterized in that** the valve block (27) is integrated within the overflow line (14).

7. Air spring arrangement according to Claim 6, **characterized in that** the valve block (27) is arranged between the compressor (15) and the air chamber (13) of the second air spring (3).

8. Air spring arrangement according to one of Claims 1 to 3, **characterized in that** the pressure system is an air pressure pump (20), comprising a container tube (21), which is at the same time the rolling piston of the second air spring (3), and a piston rod (22), which enters the container tube in a sliding manner, to be precise, with a first and second container chamber (23, 24) being formed, the first container chamber (23) having an overflow duct (25) to the air chamber (17) of the first air spring (2) and the second container chamber (24) having an overflow duct (26) to the air chamber (18) of the second air spring (3).

9. Air spring arrangement according to Claim 8, **characterized in that** the air pressure pump (20) is of a passive type by the second internal pressure p₂ being produced by the spring movements of the vehicle.

10. Air spring arrangement according to Claim 8 or 9, **characterized in that** the first container chamber (23) of the container tube (21) protrudes into the rolling piston (8) of the first air spring (2).

11. Air spring arrangement according to one of Claims 1 to 10, **characterized in that** with regard to the first diameter D₁ of the air spring bellows (4) of the first air spring (2) and the second diameter D₂ of the air spring bellows (5) of the second air spring (3) the following range of ratios applies:
first diameter D₁ to second diameter D₂ = 1 : 0.85 to 1 : 0.25.

12. Air spring arrangement according to Claim 11, **characterized in that** with regard to the first diameter D₁ and the second diameter D₂ the following range of ratios applies:
first diameter D₁ to second diameter D₂ = 1 : 0.75 to 1 : 0.25.

## Revendications

1. Agencement de ressort pneumatique (1, 16) d'un véhicule, comprenant un premier et un deuxième ressort pneumatique (2, 3) qui sont montés en parallèle, chaque ressort pneumatique se composant d'au moins les composants suivants :
- un soufflet de ressort pneumatique (4, 5) en matériau élastomère, qui est notamment pourvu d'un renforcement encastré, le soufflet de ressort pneumatique entourant une chambre à air de volume élastique (12, 13, 17, 18) en formant une boucle (10, 11), les deux chambres à air étant en liaison l'une avec l'autre par l'intermédiaire d'une conduite de transfert (14, 19) ;
- un couvercle (6, 7) avec une région de raccordement pour une extrémité du soufflet ;
- un piston de déroulage (8, 9) avec également une région de raccordement pour l'autre extrémité du soufflet ainsi qu'avec une surface de déroulage libre pour la boucle (10, 11) ;
**caractérisé en ce que**
- la chambre à air (13, 18) du deuxième ressort pneumatique (3) avec une deuxième pression interne p₂ est disposée à l'intérieur de la chambre à air (12, 17) du premier ressort pneumatique (2) avec une première pression interne p₁, les deux chambres à air communiquant l'une avec l'autre au moyen de la conduite de transfert (14, 19) et d'un système de pression (15, 20) de telle sorte que la deuxième pression interne p₂ soit supérieure à la première pression interne p₁.

2. Agencement de ressort pneumatique selon la revendication 1, **caractérisé en ce que** les couvercles (6, 7) du premier et du deuxième ressort pneumatique (2, 3) sont en contact mutuel direct de sorte que les deux boucles (10, 11) soient orientées de manière identique.

3. Agencement de ressort pneumatique selon la revendication 2, **caractérisé en ce que** la conduite de transfert (14, 19) entre les deux chambres à air (12, 13, 17, 18) comprend les couvercles (6, 7) des premier et deuxième ressorts pneumatiques (2, 3).

4. Agencement de ressort pneumatique selon l'une quelconque des revendications 1 à 3, **caractérisé en ce que** le système de pression est un compresseur (15) qui est intégré à l'intérieur de la conduite de transfert (14).

5. Agencement de ressort pneumatique selon la revendication 4, **caractérisé en ce que** le compresseur (15) est combiné à un bloc soupape (27).

6. Agencement de ressort pneumatique selon la revendication 5, **caractérisé en ce que** le bloc soupape (27) est intégré à l'intérieur de la conduite de transfert (14).

7. Agencement de ressort pneumatique selon la revendication 6, **caractérisé en ce que** le bloc soupape (27) est disposé entre le compresseur (15) et la chambre à air (13) du deuxième ressort pneumatique (3).

8. Agencement de ressort pneumatique selon l'une quelconque des revendications 1 à 3, **caractérisé en ce que** le système de pression est une pompe à pression d'air (20) comprenant un tube formant récipient (21) qui est en même temps le piston de déroulage du deuxième ressort pneumatique (3), et une tige de piston (22) qui plonge en glissant dans le tube formant récipient, et ce en formant une première et une deuxième chambre formant récipient (23, 24), la première chambre formant récipient (23) présentant un canal de transfert (25) à la chambre à air (17) du premier ressort pneumatique (2) et la deuxième chambre formant récipient (24) présentant un canal de transfert (26) à la chambre à air (18) du deuxième ressort pneumatique (3).

9. Agencement de ressort pneumatique selon la revendication 8, **caractérisé en ce que** la pompe à pression d'air (20) est de type passif, **en ce que** la deuxième pression interne p₂ est produite par les mouvements de ressort du véhicule.

10. Agencement de ressort pneumatique selon la revendication 8 ou 9, **caractérisé en ce que** la première chambre formant récipient (23) du tube formant récipient (21) pénètre dans le piston de déroulage (8) du premier ressort pneumatique (2).

11. Agencement de ressort pneumatique selon l'une quelconque des revendications 1 à 10, **caractérisé en ce que**, du point de vue du premier diamètre D₁ du soufflet de ressort pneumatique (4) du premier ressort pneumatique (2) et du deuxième diamètre D₂ du soufflet de ressort pneumatique (5) du deuxième ressort pneumatique (3), on a la plage de rapports suivante :
premier diamètre D₁ au deuxième diamètre D₂ = 1 : 0,85 à 1 : 0,25.

12. Agencement de ressort pneumatique selon la revendication 11, **caractérisé en ce que**, du point de vue du premier diamètre D₁ et du deuxième diamètre D₂, on a la plage de rapports suivante :
premier diamètre D₁ au deuxième diamètre D₂ = 1 : 0,75 à 1 : 0,25.
